# EUROPÄISCHE PATENTSCHRIFT

(11) **EP 1 134 467 B1**
(45) Veröffentlichungstag und Bekanntmachung des Hinweises auf die Patenterteilung: **21.04.2004**
(21) Anmeldenummer: 01106107.4
(22) Anmeldetag: 13.03.2001
(51) Int. Cl.: F16K 17/04, F25B 49/00

(54) **Ventilanordnung einer Kälteanlage**
Valve installation in a refrigeration system
Installation de soupape dans un système de refrigération

(30) Priorität: 16.03.2000 DE 10012714
(43) Veröffentlichungstag der Anmeldung: 19.09.2001
(73) Patentinhaber: Otto Egelhof GmbH & Co., 70736 Fellbach (DE)
(72) Erfinder: Schaffranietz, Uwe, Dr., 70734 Fellbach (DE); Windeisen, Rainer, 73630 Remshalden (DE); Robin, Jean-Jacques, 71364 Winnenden (DE)
(74) Vertreter: Patentanwalts-Partnerschaft, Rotermund + Pfusch + Bernhard

(56) Entgegenhaltungen:
- WO-A-91/14907
- WO-A-98/15788
- DE-A- 4 332 750
- GB-A- 654 278
- US-A- 3 633 380
- US-A- 4 799 359
- US-A- 4 909 277
- US-A- 4 932 428
- US-A- 5 918 471

## Beschreibung

Die Erfindung betrifft eine Ventilanordnung einer Kälteanlage mit Hoch- und Niederdruckseite aufweisendem, vorzugsweise mit Kohlendioxid (CO₂) arbeitendem Kältemittelkreislauf, welcher hochdruckseitig von der Druckseite eines Kompressors über einen hochdruckseitigen Wärmetauscher zum Eingang eines Expansionsorgans und niederdruckseitig vom Ausgang des Expansionsorgans über einen niederdruckseitigen Wärmtauscher zur Saugseite des Kompressors führt und ein zwischen Hochund Niederdruckseite parallel zum Expansionsorgan angeordnete Druckbegrenzungsventil aufweist, welches das Kältemittel des Kältemittelkreislaufes hermetisch nach außen bzw. gegen die Atmosphäre abdichtet und bei einen Schwellwert überschreitendem hochdruckseitigen Kältemitteldruck einen normal gesperrten direkten Weg von der Hochdruckseite zur Niederdruckseite öffnet.

Für die Kältemittelkreisläufe von Klimaanlagen zukünftiger Kraftfahrzeuge wird als Kältemittel Kohlendioxid (CO₂) bevorzugt, da dieser Stoff aufgrund seiner Unbrennbarkeit eine hohe Unfallsicherheit gewährleistet und darüber hinaus nicht als Schadstoff für die Umwelt gilt. Der Betrieb solcher Kältemittelkreisläufe erfolgt bevorzugt im überkritischen Bereich des Kohlendioxids.

Allerdings bringt das Kältemittel Kohlendioxid die Schwierigkeit mit sich, daß im Kältemittelkreislauf auf der Hochdruckseite bei bestimmten Betriebsbedingungen extrem hohe Drücke auftreten können.

Zur Überdrucksicherung wurde bereits vorgeschlagen, den Kältemittelkreislauf mit einer Sollbruchstelle in Form einer Berstscheibe zu versehen, um ein unkontrolliertes Bersten von unter Hochdruck stehenden Systemteilen zu vermeiden.

Statt einer Sollbruchstelle könnte auch ein Überdruckventil vorgesehen werden, über das das Kältemittel gegebenenfalls in die Atmosphäre abgeleitet wird.

Die US-Patentschriften 4,799,539 und 4,932,428 zeigen Kälteanlagen, bei denen Helium als Kältemittel verwendet wird. Um Überdrücke auf der Hochdruckseite des Kältemittelkreislaufes zu vermeiden, ist jeweils parallel zum Tieftemperatur-Kühlteil ein Überdruckventil angeordnet.

Aufgabe der Erfindung ist es, mit konstruktiv einfachen Mitteln den Betrieb und die Sicherheit einer Kälteanlage, insbesondere bei Verwendung von Kohlendioxid od.dgl. als Kältemittel, deutlich zu verbessern.

Diese Aufgabe wird erfindungsgemäß bei einer Ventilanordnung der eingangs angegebenen Art dadurch gelöst, daß das Druckbegrenzungsventil zwischen dem Ausgang des hochdruckseitigen Wärmetauschers und dem Eingang des niederdruckseitigen Wärmetauschers angeordnet ist.

Die Erfindung beruht auf dem allgemeinen Gedanken, bei übermäßigem Druck im hochdruckseitigen Wärmetauscher größere Mengen des Kältemediums vom hochdruckseitigen Wärmetauscher zum niederdruckseitigen Wärmetauscher zu leiten, als dies durch das Expansionsorgan möglich ist. Dabei erfolgt die Druckentlastung vom Hochdruck- zum Niederdruckbereich über einen nur zeitweise geöffneten Weg.

Mit der Erfindung wird der Vorteil geboten, daß die Kälteanlage auch bei Berücksichtigung extremer Betriebszustände hermetisch dicht sein kann und dementsprechend auch nach extremen Betriebszuständen nicht gewartet werden muß.

Das Druckbegrenzungsventil kann im geöffneten Zustand einen gegenüber dem Expansionsorgan bei Normalbetrieb deutlich verminderten, gleichwohl noch merklichen Drosselwiderstand aufweisen, derart, daß der Kältemittelstrom durch das Druckbegrenzungsventil mit einer gewissen Verzögerung erfolgt und die zwischen Hochdruckseite und Niederdruckseite typische Temperaturdifferenz nicht bzw. nur verzögert vermindert wird.

Gemäß einer besonders bevorzugten Ausführungsform arbeitet das Druckbegrenzungsventil parallel zu einem Expansionsorgan, welches bei Kompressorbetrieb ständig einen Kältemittelstrom von der Hochdruck- zur Niederdruckseite zuläßt.

In besonders zweckmäßiger Ausgestaltung der Erfindung ist das Expansionsorgan in das Gehäuse des Überdruckventils integriert, so daß die aus Druckbegrenzungsventil und Expansionsorgan bestehende Ventilanordnung ein Modul bildet, welches ohne weiteres anstelle eines herkömmlichen Expansionsorgans einsetzbar ist.

Im übrigen wird hinsichtlich bevorzugter Merkmale der Erfindung auf die Ansprüche sowie die nachfolgende Erläuterung der Zeichnung verwiesen, anhand der eine besonders bevorzugte Ausführungsform der Erfindung näher erläutert wird.

Dabei zeigt
- Fig. 1: eine schaltplanartige Darstellung eines Kältemittelkreislaufes einer Kälteanlage mit einem sitzgesteuerten Druckbegrenzungsventil, von dem ein beispielhaftes Schnittbild dargestellt ist, und
- Fig. 2: eine abgewandelte Ausführungsform.

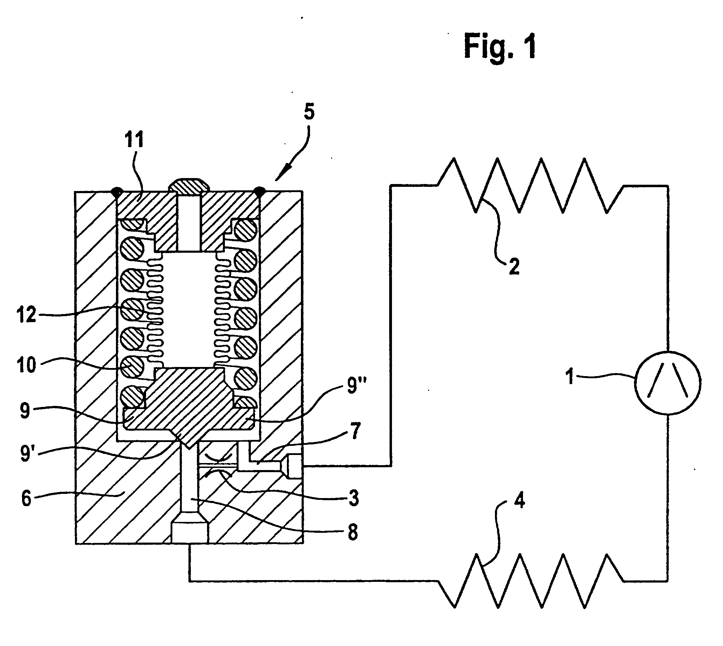

Der Kältemittelkreislauf der Fig. 1 besitzt einen Kompressor 1, der druckseitig über einen hochdruckseitigen Wärmetauscher 2 mit der Eingangsseite eines Expansionorgans 3 (z.B. Expansionsventil) verbunden ist. Die Ausgangsseite des Expansionsorgans 3 ist über einen niederdruckseitigen Wärmetauscher 4 mit der Saugseite des Kompressors 1 verbunden.

Bei Betrieb des Kompressors 1 bildet der hochdruckseitige Wärmetauscher 2 die warme bzw. wärmeabgebende Seite des Kältemittelkreislaufes, während der niederdruckseitige Wärmetauscher 4 die kalte bzw. wärmeaufnehmende Seite darstellt. Das nach der Kompressorarbeit relativ warme Kältemedium gibt im hochdruckseitigen Wärmetauscher 2 Wärme an die Umgebung ab, wobei diese Wärmeabfuhr durch ein nicht dargestelltes Gebläse od.dgl. unterstützt werden kann. Beim Durchströmen des Expansionsorgans 3 und der damit einhergehenden Drukkentspannung kühlt sich das Kältemittel stark ab, so daß über den niederdruckseitigen Wärmetauscher 4 Wärme aus der Umgebung auf das Kältemittel übertragen werden kann, wobei dieser Wärmestrom wiederum durch ein nicht dargestelltes Gebläse od.dgl. unterstützt werden kann.

Wenn Kohlendioxid (CO₂) als Kältemittel verwendet wird, können zumindest vorübergehend Betriebszustände mit außerordentlich hohen Drücken auf der Hochdruckseite des Wärmekreislaufes auftreten. Um diese Drücke zu begrenzen, ist erfindungsgemäß parallel zum Expansionsorgan 3 ein Druckbegrenzungsventil 5 vorgesehen, welches einen Bypaßweg parallel zum Expansionsorgan 3 öffnet, falls der Druck auf der Hochdruckseite einen Schwellwert überschreitet.

Im dargestellten Beispiel besitzt das Druckbegrenzungsventil 5 ein im wesentlichen zylindrisches Gehäuse 6 mit einer in der Gehäuseumfangswand angeordneten Eingangsöffnung 7 und einer im Gehäuseboden angeordneten Ausgangsöffnung 8. Diese Ausgangsöffnung 8 besitzt vorzugsweise eine gewisse Drosselwirkung, so daß der Druckabbau auf der Hochdruckseite des Kältemittelkreislaufes nur mit einer gewissen Verzögerung erfolgen kann bzw. das geöffnete Druckbegrenzungsventil 5 wie ein Expansionsorgan mit verringertem Drosselwiderstand arbeitet.

Die Ausgangsöffnung 8 wird von einem Schließkörper 9 gesteuert. Dieser besitzt einerseits eine konusförmige Spitze 9', die mit einem am zugewandten Stirnrand der Ausgangsöffnung 8 ausgebildeten Ventilsitz zusammenwirkt und den Schließkörper 9 bei geschlossenem Druckbegrenzungsventil 5 in einem vorgegebenen Abstand vom benachbarten Gehäuseboden hält. Außerdem besitzt der Schließkörper 9 einen flanschartigen Kragen 9", welcher als schließkörperseitiges Widerlager einer als Schließfederung vorgesehenen vorgespannten Schraubendruckfeder 10 dient, deren anderes Widerlager durch einen das Gehäuse 6 nach oben verschließenden Bodeneinsatz 11 gebildet wird. Im übrigen dient der Kragen 9" auch zur Begrenzung seitwärts gerichteter Bewegungen des Schließkörpers 9 im Gehäuse 6. Der Umfang des Kragens 9" muß so ausgebildet sein, daß das Kältemittel weitestgehend drosselfrei am Schließkörper 9 vorbei vom Eingang 7 zum Ausgang 8 strömen kann.

Innerhalb der Schraubendruckfeder 10 ist ein im Querschnitt kreisförmiger Balg 12 angeordnet, welcher an seinen Stirnenden dicht mit dem Schließkörper 9 bzw. dem Bodeneinsatz 11 verbunden ist. Dieser Balg 12 ist in Axialrichtung nachgiebig, in Radialrichtung jedoch hoch belastbar, insbesondere gegenüber Überdruck auf der Außenseite des Balges 12.

Der Innenraum des Balges 12 kann über eine Öffnung im Bodeneinsatz 11 mit der Atmosphäre kommunizieren.

Gemäß einer besonders bevorzugten Ausführungsform ist jedoch vorgesehen, den Innenraum des Balges 12 mit einem Gas, insbesondere Helium, zu befüllen und die vorgenannte Öffnung im Bodeneinsatz 11 wie dargestellt zu verschließen.

Der Balg 12 dient in erster Linie dazu, einen Bereich der Rückseite des Schließkörpers 9 gegenüber dem Druck im Innenraum des Gehäuses 6 abzuschirmen. Damit wird gewährleistet, daß in der dargestellten Schließlage des Schließkörpers 9 eine vergleichsweise große Fläche des Schließkörpers 9 vom Druck in Öffnungsrichtung des Schließkörpers 9 gegen die Kraft der Schraubendruckfeder 10 beaufschlagt wird. Sobald ein Schwellwert des Druckes überschritten wird, wird der Schließkörper 9 aus seiner Schließlage ausgehoben, so daß ein Bypaßweg zum Expansionsorgan 3 freigegeben wird und der Druck auf der Druckseite des Kältekreislaufes entsprechend absinkt.

Die gegebenenfalls vorgesehene Gasfüllung des Balges 12 ist so bemessen, insbesondere auf einen derart geringen Balginnendruck eingestellt, daß eventuelle Temperaturänderungen und damit einhergehende Änderungen des Innendruckes im Balg 12 nur einen im Vergleich zur Schließkraft der Schraubendruckfeder 10 geringen Einfluß auf das Schließverhalten des Schließkörpers 9 haben können.

Eine Füllung des Balges 12 mit Helium ist insofern vorteilhaft, als eine eventuelle Leckage des Balges 12 bzw. seiner Verbindungen mit dem Schließkörper 9 bzw. dem Bodeneinsatz 11 vor Einbau des Druckbegrenzungsventiles 5 in den Kältemittelkreislauf besonders leicht feststellbar ist, da sich Helium mittels entsprechender Sensoren auch bei geringer Konzentration gut nachweisen läßt.

Wie in Fig. 1 dargestellt ist, ist das Expansionsorgan 3 bevorzugt in das Gehäuse 6 des Druckbegrenzungsventils 5 integriert, wobei das Expansionsorgan 3 als Drosselbohrung zwischen der Eingangsöffnung 7 und der Ausgangsöffnung 8 des Druckbegrenzungsventils 5 ausgebildet sein kann.

Auf diese Weise bilden das Expansionsorgan 3 und das Druckbegrenzungsventil 5 ein nur zwei Anschlußöffnungen 7 und 8 aufweisendes Modul, welches im Kältemittelkreislauf in gleicher Weise wie ein herkömmliches Expansionsorgan angeordnet werden kann.

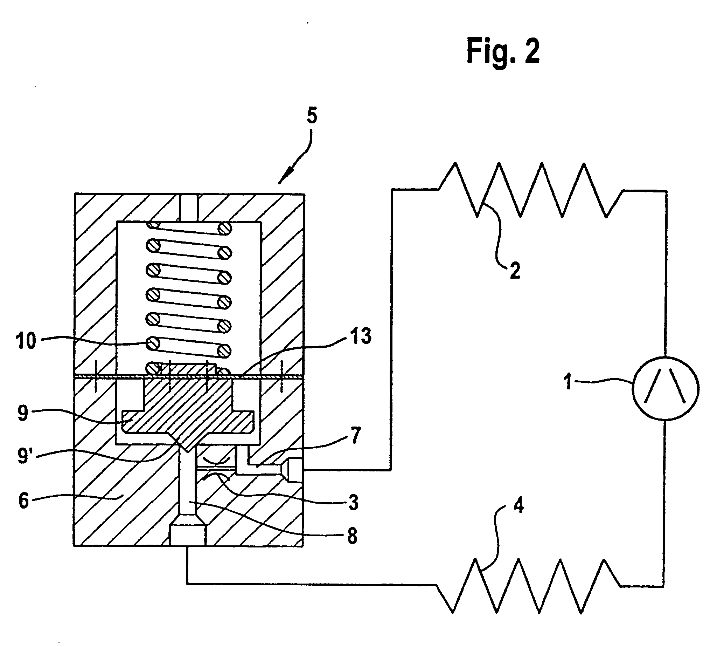

Die Ausführungsform der Fig. 2 unterscheidet sich von der Ausführungsform nach Fig. 1 vor allem dadurch, daß anstelle des Balges 12 eine Membran 13 vorgesehen ist, wobei der Raum oberhalb der Membran 13 zur Atmosphäre offen ist. Grundsätzlich ist es jedoch auch möglich, diesen Raum zur Atmosphäre hin abzuschließen und gegebenenfalls mit Helium od.dgl. zu befüllen.

## Patentansprüche

1. Ventilanordnung einer Kälteanlage mit eine Hoch- und Niederdruckseite aufweisendem, mit Kohlendioxid (CO₂) arbeitendem Kältemittelkreislauf, welcher hochdruckseitig von der Druckseite eines Kompressors (1) über einen hochdruckseitigen Wärmetauscher (2) zum Eingang eines Expansionsorgans (3) und niederdruckseitig vom Ausgang des Expansionsorgans über einen niederdruckseitigen Wärmtauscher (4) zur Saugseite des Kompressors führt und ein zwischen Hochund Niederdruckseite parallel zum Expansionsorgan angeordnete Druckbegrenzungsventil (5) aufweist, welches das Kältemittel des Kältemittelkreislaufes hermetisch nach außen bzw. gegen die Atmosphäre abdichtet und bei einen Schwellwert überschreitendem hochdruckseitigen Kältemitteldruck einen normal gesperrten direkten Weg (7,8) von der Hochdruckseite zur Niederdruckseite öffnet,
**dadurch gekennzeichnet,**
**daß** das Druckbegrenzungsventil (5) zwischen dem Ausgang des hochdruckseitigen Wärmetauschers (2) und dem Eingang des niederdruckseitigen Wärmetauschers (4) angeordnet ist.

2. Ventilanordnung nach Anspruch 1,
**dadurch gekennzeichnet,**
**daß** das Druckbegrenzungsventil (5) im geöffneten Zustand einen merklichen Drosselwiderstand aufweist, derart, daß das hochdruckseitige Kältemittel verzögert abströmt und eine zwischen Hochdruckseite und Niederdruckseite typische Temperaturdifferenz nicht bzw. nur verzögert vermindert wird.

3. Ventilanordnung nach einem der Ansprüche 1 und 2,
**dadurch gekennzeichnet,**
**daß** der Schließkörper (9) des Druckbegrenzungsventiles (5) stirnseitig eines zylinderähnlichen, in Richtung der Zylinderachse nachgiebigen Balges (12) angeordnet ist, welcher einen in Öffnungsrichtung weisenden Bereich des Schließkörpers gegenüber dem hochdruckseitigen Druck des Kältemittels abschirmt.

4. Ventilanordnung nach einem der Ansprüche 1 und 2,
**dadurch gekennzeichnet,**
**daß** der Schließkörper (9) des Druckbegrenzungsventiles (5) an einer Membran (10) angeordnet ist, welche einen in Öffnungsrichtung weisenden Bereich des Schließkörpers gegenüber dem hochdruckseitigen Druck des Kältemittels abschirmt.

5. Ventilanordnung nach Anspruch 3 oder 4,
**dadurch gekennzeichnet,**
**daß** der Innenraum des Balges (12) bzw. der Raum auf der vom Kältemittel abgewandten Seite der Membran (13) mit einem nur unter geringem Druck stehenden Gas gefüllt ist, derart, daß der Gasdruck gegenüber sonstigen den Schließkörper (9) in Schließrichtung beaufschlagenden Kräften gering bzw. vernachlässigbar ist.

6. Ventilanordnung nach Anspruch 5,
**dadurch gekennzeichnet,**
**daß** der Balginnenraum bzw. der Raum auf der vom Kältemittel abgewandten Seite der Membran (13) mit Helium gefüllt ist.

7. Ventilanordnung nach einem der Ansprüche 1 bis 6,
**dadurch gekennzeichnet,**
**daß** das Expansionsorgan (3) in das Gehäuse (6) des Druckbegrenzungsventils (5) integriert und/oder zwischen den Anschlüssen (7,8) des Druckbegrenzungsventils (5) angeordnet ist.

## Claims

1. A valve configuration of a refrigeration system comprising a high-pressure side and a low-pressure side, a refrigerant circuit which operates with carbon dioxide (CO₂), leading on the high-pressure side from the pressure side of a compressor (1) through a heat exchanger (2) on the high-pressure side to the entrance of an expansion unit (3) and leading on the low-pressure side from the outlet of the expansion unit via a heat exchanger (4) on the low-pressure side to the intake side of the compressor, and comprising a pressure-limiting valve (5) situated between the high-pressure side and the low-pressure side in parallel with the expansion unit, hermetically sealing the refrigerant of the refrigerant circuit from the outside, i.e., with respect to the atmosphere, and opening a direct path (7, 8) from the high-pressure side to the low-pressure side, said path being normally blocked, when the refrigerant pressure on the high-pressure side exceeds a threshold value,
**characterized in that**
the pressure-limiting valve (5) is situated between the outlet of the heat exchanger (2) on the high-pressure side and the inlet of the heat exchanger (4) on the low-pressure side.

2. The valve configuration according to Claim 1,
**characterized in that**
the pressure-limiting valve (5) has a significant throttle resistance when opened, such that the refrigerant on the high-pressure side flows out with a time lag, and a typical temperature difference between the high-pressure side and the low-pressure side is not reduced at all or is reduced only with a time lag.

3. The valve configuration according to any one of Claims 1 and 2,
**characterized in that**
the closing body (9) of the pressure-limiting valve (5) is situated at the end of a cylinder-like bellows (12) which is flexible in the direction of the cylinder axis and shields an area of the closing body which points in the direction of opening with respect to the pressure of the refrigerant on the high-pressure side.

4. The valve configuration according to any one of Claims 1 and 2,
**characterized in that**
the closing body (9) of the pressure-limiting valve (5) is situated on a diaphragm (10) which shields an area of the closing body which points in the direction of opening with respect to the pressure of the refrigerant on the high-pressure side.

5. The valve configuration according to Claim 3 or 4,
**characterized in that**
the interior of the bellows (12) and/or the space on the side of the membrane (13) which faces away from the refrigerant is filled with a gas under a low-pressure such that the gas pressure is low or minimal with respect to other forces acting on the closing body (9) in the closing direction.

6. The valve configuration according to Claim 5,
**characterized in that**
the interior of the bellows, i.e., the space on the side of the membrane (13) facing away from the refrigerant, is filled with helium.

7. The valve configuration according to any one of Claims 1 through 6,
**characterized in that**
the expansion unit (3) is integrated into the housing (6) of the pressure-limiting valve (5) and/or is situated between the connections (7, 8) of the pressure-limiting valve (5).

## Revendications

1. Installation de soupape dans un système de réfrigération comportant un circuit de fluide réfrigérant présentant un côté haute pression et un côté basse pression, travaillant avec du dioxyde de carbone (CO₂), qui conduit, du côté haute pression, du côté pression d'un compresseur à l'entrée d'un organe d'expansion (3) en passant par un échangeur de chaleur (2) de côté haute pression et, du côté basse pression, de la sortie de l'organe d'expansion au côté admission du compresseur en passant par un échangeur de chaleur (4) de côté basse pression, et présente un limiteur de pression (5) disposé entre côté haute pression et côté basse pression parallèlement à l'organe d'expansion, qui assure l'étanchéité vers l'extérieur ou par rapport à l'atmosphère du fluide réfrigérant du circuit de fluide réfrigérant et ouvre une voie directe (7, 8), normalement fermée, du côté haute pression au côté basse pression dans le cas d'une pression de fluide réfrigérant dépassant une valeur seuil du côté haute pression,
**caractérisée en ce**
**que** le limiteur de pression (5) est disposée entre la sortie de l'échangeur de chaleur (2) du côté haute pression et l'entrée de l'échangeur de chaleur (4) du côté basse pression.

2. Installation de soupape selon la revendication 1,
**caractérisée en ce**
**que** le limiteur de pression (5) présente à l'état ouvert une résistance d'étranglement notable, de telle sorte que le fluide réfrigérant du côté haute pression s'écoule de manière temporisée et qu'une différence de température caractéristique entre le côté haute pression et le côté basse pression n'est pas réduite ou ne l'est que de manière temporisée.

3. Installation de soupape selon l'une des revendications 1 et 2,
**caractérisée en ce**
**que** l'obturateur (9) du limiteur de pression (5) est disposé du côté frontal d'un soufflet (12) similaire à un cylindre, souple dans la direction de l'axe de cylindre, qui isole par rapport à la pression du côté haute pression du fluide réfrigérant une zone de l'obturateur tournée dans le sens d'ouverture.

4. Installation de soupape l'une des revendications 1 et 2,
**caractérisée en ce**
**que** l'obturateur (9) du limiteur de pression (5) est disposé sur une membrane (10), qui isole par rapport à la pression du côté haute pression du fluide réfrigérant une zone de l'obturateur tournée dans le sens d'ouverture.

5. Installation de soupape selon la revendication 3 ou 4,
**caractérisée en ce**
**que** l'espace intérieur du soufflet (12) ou l'espace du côté de la membrane (13) opposé au fluide réfrigérant est rempli d'un gaz soumis seulement à une pression faible, de telle sorte que la pression du gaz est faible ou négligeable par rapport à d'autres forces agissant sur l'obturateur (9) dans le sens de fermeture.

6. Installation de soupape selon la revendication 5,
**caractérisée en ce**
**que** l'espace intérieur du soufflet ou l'espace du côté de la membrane (13) opposé au fluide réfrigérant est rempli d'hélium.

7. Installation de soupape selon l'une des revendications 1 à 6,
**caractérisée en ce**
**que** l'organe d'expansion (3) est intégré dans le corps (6) du limiteur de pression (5) et/ou est disposé entre les raccords (7, 8) du limiteur de pression (5).
